# FASCICULE DE BREVET EUROPEEN

(11) **EP 1 470 460 B1**
(45) Date de publication et mention de la délivrance du brevet: **05.04.2006**
(21) Numéro de dépôt: 03714558.8
(22) Date de dépôt: 31.01.2003
(51) Int. Cl.: G05D 1/03

(54) **AMELIORATION A UN PROCEDE DE CONTROLE D'UN ROBOT MOBILE AUTONOME ET DISPOSITIF ASSOCIE**
VERBESSERUNG EINES STEUERVERFAHRENS FÜR EINEN MOBILEN AUTONOMEN ROBOTER UND DAZUGEHÖRIGE VORRICHTUNG
IMPROVEMENT TO A METHOD FOR CONTROLLING AN AUTONOMOUS MOBILE ROBOT ET RELATED DEVICE

(30) Priorité: 31.01.2002 BE 200200054
(43) Date de publication de la demande: 27.10.2004
(73) Titulaire: Solar & Robotics S.A., B-1050 Bruxelles (BE)
(72) Inventeur: COLENS, André, B-1330 Rixensart (BE)
(74) Mandataire: Colens, Alain M.G.M.
(86) Numéro de dépôt international: PCT/BE2003/000015
(87) Numéro de publication internationale: WO 2003/065140

(56) Documents cités:
- US-A- 4 990 841
- US-A- 5 068 791
- US-A- 5 347 456
- US-B1- 6 300 737

## Description

La présente invention concerne un dispositif et un procédé de contrôle d'un engin robotique mobile et autonome.

La plupart des engins mobiles autonomes, tels que les tondeuses à gazon automatiques, font appel, pour limiter leurs déplacements dans une zone de travail déterminée, à une barrière électronique, constituée d'un fil placé à la périphérie de la surface à couvrir et dans lequel circule un signal électrique de faible intensité à basse fréquence (p.e. quelques dizaines de mA à 5 KHz).

Une connaissance précise de l'amplitude et de la phase du signal peut permettre au robot de se maintenir à l'intérieur du périmètre défini par un fil périphérique. L'utilité de la mesure précise de l'amplitude du signal dans le cadre d'un système de navigation pour tondeuses à gazon automatiques a déjà été décrite dans la demande de brevet WO 98/41081.

La mesure de la phase du signal peut permettre de déterminer si la mesure est faite à l'intérieur ou à l'extérieur de la boucle générant le champ magnétique. En passant de l'intérieur de la boucle à l'extérieur les lignes de force changent en effet de direction et génèrent un changement de phase du signal de 180° selon les lois générales de l'électromagnétisme.

La présente invention a pour objet de proposer un dispositif de mesure efficace et peu coûteux permettant à la fois une mesure précise de l'amplitude du signal avec un rapport signal bruit constant quel que soit la position du mobile sur la surface et la génération des informations de phase permettant au mobile de déterminer avec certitude s'il se trouve à l'intérieur ou à l'extérieur de la surface à couvrir.

Une des caractéristiques du dispositif et procédé selon l'invention consiste en l'utilisation pour la mesure de l'amplitude, d'une variante particulière d'un filtre adapté à la détection de signaux périodiques, déjà utilisé par exemple en astronomie pour la détection d'astres lointains, appelé "multichannel scaler" ou "averager". Ce type de filtre est décrit dans la littérature par exemple dans "The art of electronics", P. Horowitz , Cambridge University Press 2d Ed. Chap. 15 § 13 et suivants.

Ce type de dispositif effectue plusieurs échantillonnages synchrones de l'amplitude du signal durant chaque période. Le nombre d'échantillonnages par période varie de 4 à 64. Chaque échantillon est stocké dans une mémoire indépendante (les corbeilles). Les mesures sont répétées durant plusieurs périodes et les échantillons correspondants sont additionnés dans chaque corbeille.

En d'autres mots, la forme du signal est co-additionnée modulo sa période.

L'avantage d'appliquer un tel dispositif à un engin robotique mobile est qu'il permet d'extraire aisément, de l'important bruit électrique généré par l'engin, la phase et l'amplitude du signal périodique provenant du fil périphérique.

A la fin de chaque période le contenu des corbeilles est comparé avec une référence fixe. Si le contenu d'aucune corbeille ne dépasse la valeur de référence, un compteur est incrémenté. Après un certain nombre d'itérations le contenu d'une des corbeilles dépasse nécessairement la valeur de référence. La valeur du compteur est stockée et le compteur remis à zéro.

La valeur C du compteur stockée, associée éventuellement à une opération d'étalonnage, permet de déduire la distance de la machine par rapport au fil périphérique. Au plus la machine est éloignée du fil, au plus le signal est faible, et plus élevé sera le nombre d'échantillonnages nécessaires pour atteindre la valeur de référence.

La distance peut être déduite par exemple en appliquant la relation C=K*X ((D-X)/D) ou on suppose deux fils parallèles, X est la distance du mobile au fil, D la distance entre les fils et K est une constante qui tient compte du gain du dispositif.

Comme on peut le comprendre un des avantages du dispositif selon l'invention est que le rapport signal bruit de la mesure reste constant quel que soit la valeur du signal, c'est à dire quel que soit la distance de la machine par rapport au fil périphérique, le facteur de sélectivité du filtre étant proportionnel au nombre d'échantillons et ce dernier inversement proportionnel à l'amplitude du signal.

L'ensemble des corbeilles donne également une représentation de la forme du signal (plus le nombre d'échantillons par période est grand plus précis sera la forme du signal).

L'analyse numérique de la forme d'onde par l'ordinateur de bord permet aisément de détecter un changement de phase du signal particulièrement si celui-ci est asymétrique.

Dans le cas d'un signal symétrique, une référence de phase doit être conservée par l'ordinateur de bord. Ceci peut être obtenu soit en utilisant un oscillateur local stable dont la phase suit la phase du signal périphérique au moyen d'un PLL, la boucle de réaction étant ouverte si le mobile sort de l'enceinte, soit en utilisant une seconde bobine positionnée sur un côté de l'engin mobile. Dans ce dernier cas lorsque l'engin traverse la limite, une des deux bobines se trouve à l'extérieur et l'autre à l'intérieur de la limite du fil périphérique. La différence de phase est détectée immédiatement et l'engin revient entièrement à l'intérieur de sa surface de travaille.

Il est à noter qu'indépendamment de la détection de changement de phase de 180° provoqué par un passage du fil périphérique, le système est également apte à détecter une modulation de phase générée par le générateur du fil périphérique, et par conséquent de recevoir un message envoyé par le fil périphérique à la machine. Ce message peut être un message de paramétrage ou un message de commande, par exemple de retour du robot à la station de recharge.

En résumé l'invention propose donc entre autres un dispositif de navigation pour robot mobile comportant un microprocesseur et un moyen de mesure de l'amplitude d'un signal électromagnétique périodique de basse fréquence, dont la fréquence varie de 1 à 15 kHz, émis par un ou des éléments de limite, par exemple un fil, placés à la périphérie de la surface de travail dudit robot mobile, ledit moyen de mesure effectuant un échantillonnage de l'amplitude du signal durant chaque période, le résultat de chaque mesure de l'échantillonnage étant stocké dans des mémoires indépendantes et les mesures étant répétées pendant plusieurs périodes, les résultats récoltés étant additionnés dans lesdites mémoires jusqu'à ce que le contenu d'une de ces mémoires atteigne un seuil de référence, le nombre d'échantillonnages nécessaire et le contenu de chaque mémoire pouvant alors être interprété par analyse numérique par le microprocesseur pour déterminer la distance ou variation de distance par rapport auxdits éléments de limite.

Les figures présentées en annexe illustrent l'invention à titre d'exemple uniquement.

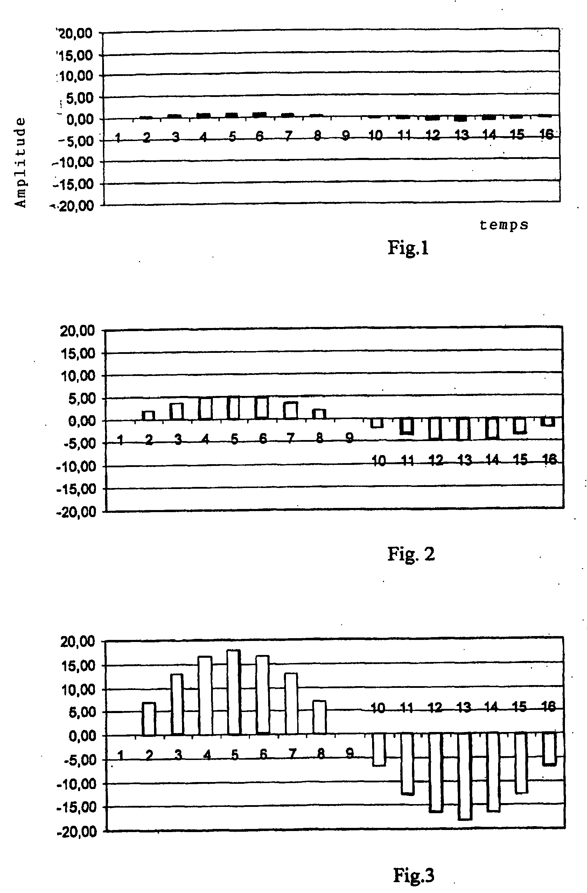

Les figures 1 à 3 montrent l'évolution du contenu des corbeilles après respectivement 2, 10, 36 périodes de 200 µsec. A la 36ème période le contenu de la corbeille n°5 dépasse la valeur fixée de 18 unités (référence fixe).

Ce nombre de périodes, ainsi éventuellement que la valeur précise du contenu de la corbeille n°5, sont mémorisés et utilisés par l'ordinateur de bord pour déterminer la distance au fil périphérique. Cette détermination peut être relative ou absolue. Une détermination relative est suffisante si l'engin robotique, selon son algorithme interne de navigation, doit simplement suivre un parcours parallèle au fil périphérique.

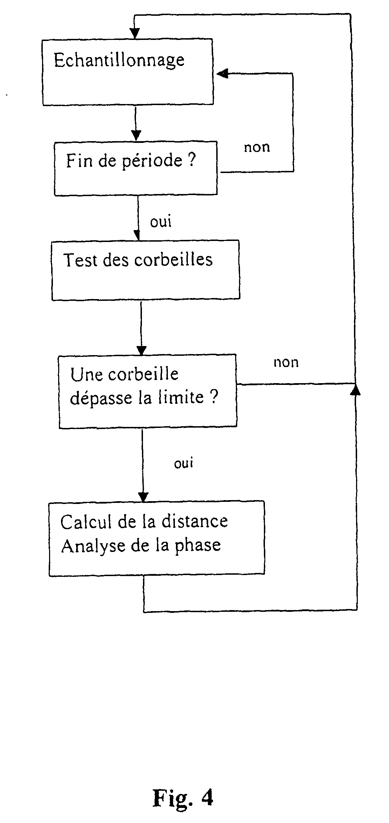

La figure 4 montre un diagramme de blocs explicitant les différentes phases de la boucle de mesure.

Les figures 5 et 6 illustrent le contenu des corbeilles pour un signal carré asymétrique, l'engin étant respectivement à l'intérieur et à l'extérieur du fil périphérique, ou inversément.

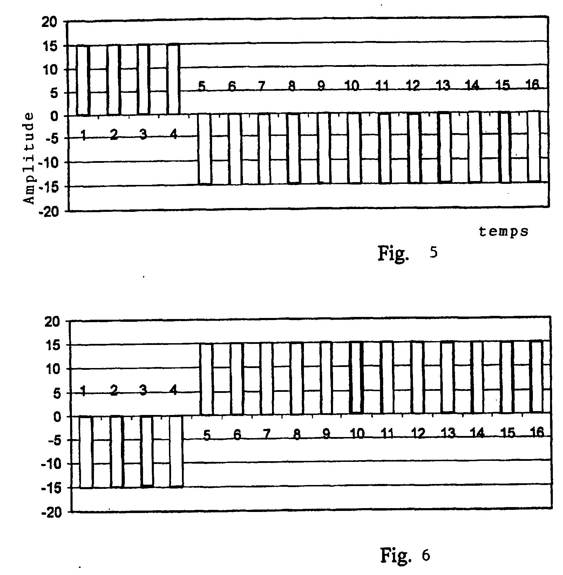

Si l'on observe le contenu des corbeilles pour deux signaux asymétriques déphasés de 180° on voit aisément que dans le cas du signal de la figure 5 il a 4 corbeilles positives et que dans le cas du signal de la figure 6 il y en a 12.

L'invention peut être appliquée ou adaptée à d'autres dispositifs que des tondeuses à gazon, p.e. des engins de ramassage d'objets ou des aspirateurs robotiques.

## Revendications

1. Dispositif de navigation pour robot mobile comportant
- un moyen de mesure de l'amplitude d'un signal électromagnétique périodique émis par un ou des éléments de limite, par exemple un fil, placés à la périphérie de la surface de travail dudit robot mobile, les mesures étant répétées pendant plusieurs périodes,
- un moyen pour effectuer l'échantillonnage de l'amplitude du signal durant chaque période,
- des mémoires indépendantes pour stocker le résultat de chaque mesure de l'échantillonnage, les résultats récoltés étant additionnés dans lesdites mémoires jusqu'à ce que le contenu d'une de ces mémoires atteigne un seuil de référence,
- un microprocesseur apte à interpréter par analyse numérique le nombre d'échantillonnages nécessaire pour atteindre ledit seuil et le contenu de chaque mémoire, ledit microprocesseur étant alors apte à déterminer la distance ou variation de distance par rapport auxdits éléments de limite.

2. Dispositif selon la revendication 1 dans lequel le moyen de mesure de l'amplitude est aussi un moyen de mesure de la phase.

3. Dispositif de navigation selon la revendication 2 dans lequel le microprocesseur est apte à détecter par analyse numérique la forme du signal et est apte à déterminer un changement de phase provoqué par le passage du robot au delà desdits éléments de limite.

4. Dispositif selon n'importe laquelle des revendications précédentes dans lequel le microprocesseur comprend un moyen pour détecter par analyse numérique une modulation de phase générée par le générateur du fil périphérique, et par conséquent de recevoir un message envoyé par le fil périphérique au robot mobile.

5. Dispositif selon la revendication 4 dans lequel le message est une commande de retour du robot à une station de recharge.

6. Dispositif selon n'importe laquelle des revendications précédentes dans lequel l'ordinateur de bord comprend un moyen pour conserver une référence de phase.

7. Dispositif selon n'importe laquelle des revendications précédentes adapté à une tondeuse à gazon robotique.

8. Dispositif selon n'importe laquelle des revendications précédentes dans lequel la fréquence du signal électromagnétique périodique varie de 1 à 15 kHz.

9. Dispositif selon n'importe laquelle des revendications précédentes comportant deux détecteurs d'amplitude du signal périodique, situés à deux endroits différents de l'engin mobile.

10. Procédé de contrôle d'un engin robotique mobile comportant la mesure de l'amplitude et de la phase d'un signal électromagnétique périodique émis par un ou des éléments de limite, par exemple un fil, placés à la périphérie de la surface de travail dudit robot mobile, ledit moyen de mesure effectuant un échantillonnage de l'amplitude du signal durant chaque période, le résultat de chaque mesure de l'échantillonnage étant stocké dans des mémoires indépendantes et les mesures étant répétées pendant plusieurs périodes, les résultats récoltés étant additionnés dans lesdites mémoires jusqu'à ce que le contenu d'une de ces mémoires atteigne un seuil de référence prédéterminé, le nombre d'échantillonnages nécessaire et le contenu de chaque mémoire pouvant alors être interprété par analyse numérique par le microprocesseur pour déterminer la distance ou variation de distance par rapport auxdits éléments de limite et/ou la forme dudit signal périodique.

11. Procédé selon la revendication 10 dans lequel le nombre d'échantillonnages par période varie de 4 à 64.

12. Procédé selon la revendication 10 dans lequel une commande de retour de l'engin robotique est reçue lorsqu'une modulation de phase générée par le générateur de l'élément limite est détectée.

## Patentansprüche

1. Navigationsvorrichtung für einen beweglichen Roboter, mit
- einem Mittel zur Messung der Amplitude eines periodischen elektromagnetischen Signals, das von einem oder mehreren Begrenzungselementen, zum Beispiel einem Draht, ausgesandt wird, die an der Peripherie der Arbeitsfläche des beweglichen Roboters angeordnet sind, wobei die Messungen während mehrerer Perioden wiederholt werden,
- einem Mittel für eine Analyse der Amplitude des Signals während jeder Periode,
- unabhängigen Speichern, um das Ergebnis jeder Analyse zu speichern, wobei die erzielten Ergebnisse in die besagten Speicher addiert werden, bis der Inhalt eines dieser Speicher eine Referenzschwelle erreicht hat,
- einem Mikroprozessor, der geeignet ist, durch numerische Analyse die Anzahl der Analysen zu ermitteln, die erforderlich sind, um die besagte Schwelle und den Inhalt jedes Speichers zu erreichen, wobei der besagte Mikroprozessor auch geeignet ist, den Abstand oder die Abstandsänderung in Bezug auf die besagten Begrenzungselemente zu bestimmen.

2. Vorrichtung gemäß Anspruch 1, bei der das Mittel zur Messung der Amplitude auch ein Mittel zur Messung der Phase ist.

3. Navigationsvorrichtung gemäß Anspruch 2, bei der der Mikroprozessor geeignet ist, durch numerische Analyse die Form des Signals zu ermitteln und geeignet ist, eine Phasenänderung zu ermitteln, die dadurch hervorgerufen wird, daß der Roboter die Begrenzungselemente überquert.

4. Vorrichtung gemäß einem der vorangehenden Ansprüche, bei der der Mikroprozessor ein Mittel umfaßt, um durch numerische Analyse eine Phasenmodulation zu ermitteln, die durch den Generator des begrenzenden Drahtes erzeugt wurde, und um daraus eine Mitteilung abzuleiten, die über den begrenzenden Draht an den beweglichen Roboter übermittelt wurde.

5. Vorrichtung gemäß Anspruch 4, bei der die Mitteilung ein Befehl zur Rückkehr des Roboters zu einer Ladestation ist.

6. Vorrichtung gemäß einem der vorangehenden Ansprüche, bei der der Bordrechner ein Mittel umfaßt, um eine Phasenreferenz beizubehalten.

7. Vorrichtung gemäß einem der vorangehenden Ansprüche, wobei diese für einen automatischen Rasenmäher geeignet ist.

8. Vorrichtung gemäß einem der vorangehenden Ansprüche, bei der die Frequenz des periodischen elektromagnetischen Signals zwischen 1 und 15 kHz variiert.

9. Vorrichtung gemäß einem der vorangehenden Ansprüche, mit zwei Detektoren zum Erfassen der Amplitude des periodischen Signals, die sich an zwei verschiedenen Bereichen des beweglichen Gerätes befinden.

10. Verfahren zur Kontrolle eines beweglichen autonomen Gerätes, das die Messung der Amplitude und der Phase eines periodischen elektromagnetischen Signales umfaßt, das von einem oder mehreren Begrenzungselementen, zum Beispiel einem Draht, ausgesandt wird, die an der Peripherie der Arbeitsfläche des beweglichen Roboters angeordnet sind, wobei das besagte Meßmittel während jeder Periode eine Analyse der Amplitude des Signals durchführt und wobei das Ergebnis jeder Analyse in unabhängigen Speichern gespeichert wird und wobei die Messungen während mehrerer Perioden wiederholt werden und die erhaltenen Ergebnisse in den besagten Speichern addiert werden, bis der Inhalt eines dieser Speicher eine vorbestimmte Referenzschwelle erreicht, wobei die erforderliche Anzahl der Analysen und der Inhalt jedes Speichers über eine numerische Analyse durch den Mikroprozessor evaluiert werden, um den Abstand oder die Abstandsänderung in Bezug auf die besagten Begrenzungselemente und/oder die Form des periodischen Signales zu ermitteln.

11. Verfahren gemäß Anspruch 10, bei dem die Anzahl der Analysen pro Periode zwischen 4 und 64 variiert.

12. Verfahren gemäß Anspruch 10, bei dem dann ein Befehl zur Rückkehr des robotischen Gerätes empfangen wird, wenn eine Phasenmodulation, die durch den Generator des Begrenzungselementes erzeugt wird, festgestellt wird.

## Claims

1. Navigation device for a mobile robot comprising a
- a means for measuring the amplitude of a electromagnetic signal transmitted by one or more limiting elements, for example a wire, positioned at the periphery of the work surface of said mobile robot, the measuring being repeated during several periods,
- independent memories for storing the result of each measurement of the sampling, the collected results being added to said memories until the content of one of these memories reaches a reference threshold,
- a microprocessor able to interpret by numerical analysis the number of samplings necessary to reach such threshold and the content of each memory, said microprocessor being then able to determine the distance or the variation of the distance of the robot in relation to said limiting elements.

2. Device according to claim 1 wherein the means for measuring the amplitude is also the means for measuring the phase.

3. Navigation device according to claim 2 wherein the numerical analysis is able to detect the shape of the signal and is able to determine a phase change caused by the passing of the robot beyond said limit elements.

4. Device according any of the previous claims in which the microprocessor includes also a means for detecting by numerical analysis a phase modulation generated by the peripheral wire generator, and therefore for receiving a message sent by the peripheral wire to the mobile robot.

5. Device according to claim 4 wherein the message is an instruction to the robot to return to the recharging station.

6. Device according to any of the previous claims wherein the navigation computer includes a means to conserve a phase reference.

7. Device according to any of the previous claims adapted to a robotic lawn mower.

8. Device according to any of the previous claims wherein the frequency of the electromagnetic signal varies from 1 to 15 KHz.

9. Device according to any of the previous claims comprising two detectors of the amplitude of the periodic signal, placed at two different locations of the mobile machine.

10. A method for controlling a mobile robotic machine comprising the measurement of the amplitude and of the phase of a periodic electromagnetic signal transmitted by one or several limit elements, for example a wire, located at the periphery of the working surface of said mobile robot, said measuring means effecting a sampling of the amplitude of the signal during each period, the result of each sampling measurement being stored in independent memories and the measurements being repeated during several periods, the collected results being added in said memories until the content of one of these memories reaches a reference threshold, the number of necessary samplings and the content of each memory allowing the interpretation by numeric analysis performed by the microprocessor in order to determine the distance or variation of the distance relative to said limiting elements and/or the shape of the periodic signal.

11. Method according to any of the previous claims wherein the number of sampling per period varies from 4 to 64.

12. Method according to claim 10 wherein an instruction of return for the robotic machine is received when a phase modulation generated by the generator of the limit element is detected.
